# EUROPEAN PATENT SPECIFICATION

(11) **EP 2 717 059 B1**
(45) Date of publication and mention of the grant of the patent: **18.11.2015**
(21) Application number: 12789085.3
(22) Date of filing: 25.05.2012
(51) Int. Cl.: G01P 15/09, G01P 15/08, G01P 1/02

(54) **ACCELERATION SENSOR**
BESCHLEUNIGUNGSMESSER
CAPTEUR D'ACCÉLÉRATION

(30) Priority: 26.05.2011 JP 2011117567
(43) Date of publication of application: 09.04.2014
(73) Proprietor: NEC Corporation, Tokyo 108-8001 (JP)
(72) Inventor: SHINODA, Shigeki, Tokyo 108-8001 (JP); SASAKI, Yasuhiro, Tokyo 108-8001 (JP); KASAI, Shigeru, Tokyo 108-8001 (JP); TAKATA, Soichiro, Tokyo 108-8001 (JP); TAKAHASHI, Masatake, Tokyo 108-8001 (JP)
(74) Representative: Reeve, Nicholas Edward
(86) International application number: PCT/JP2012/063470
(87) International publication number: WO 2012/161310

(56) References cited:
- EP-A1- 1 553 418
- EP-A2- 0 401 669
- WO-A1-2011/043219
- JP-A- 2000 146 997
- JP-A- 2002 238 094
- JP-A- 2002 238 094
- JP-A- 2003 287 549
- JP-A- 2005 055 305
- US-A1- 2005 000 288

## Description

### TECHNICAL FIELD

This invention relates to an acceleration sensor for measuring or detecting vibration of an electronic device having a mechanical driving source.

### BACKGROUND OF THE INVENTION

In recent years, information electronic devices become popular, and the amount of information stored into an information storage apparatus such as HDDs and the value of the information thereof have been increased. In general, an HDD having high cost performance in capacity is used as an information storage apparatus.

However, since the HDDs are configured with mechanical running parts, the loss of information associated with the mechanical failure thereof is to be a problem. Therefore, before the HDD failure is generated, the protection of information stored in the HDD is carried out by measuring vibration generated when the mechanical running parts operate and by detecting a characteristic vibration as a sign of failure. Here, in general, an acceleration sensor is used for detection of vibration.

In an acceleration sensor used for a system for information protection, a long life and high-reliability acceleration sensor is required that can withstand the use under electrically noisy surroundings in electronic devices and having impact resistance exceeding a specification of apparatus that is subjected to measurement.

Heretofore, a sensor using a piezoelectric body, such as piezoelectric ceramic, is known as an acceleration sensor, which uses mechanic-electric conversion properties. A piezoelectric acceleration sensor converts the strain of the piezoelectric body generated by mechanical vibration from outside, to electrical voltage by the piezoelectric effect thereof and then supplying it. There is a type of a piezoelectric acceleration sensor in which electrical charge is generated due to the bending vibration of a vibrating element composed of a laminate structure of a piezoelectric ceramic plate and a metal supporting plate.

According to a supporting manner of the vibrating element, bending type piezoelectric acceleration sensors are classified into a cantilever beam type structure and a fixed-fixed beam type structure. Both of the bending type piezoelectric acceleration sensors are achieved by fixing an end of the vibrating element to a sensor housing to be a supporting base by using adhesive agents etc.

In addition, in order to improve the electrical shielding effect of the loaded electric circuit and the vibration transmission efficiency to the vibrating element, metal materials are widely used for the sensor housing (Japanese Patent Kokai Publication No. JP2008-134167A).

However, when the metallic sensor housing and the vibrating element are directly and electrically connected, there is a problem in that an electrical noise caused by an outer mixed electrical charge is overlapped to a sensor output signal due to mixing a electrical charge, which is transmitted from outside to the vibrating element via the sensor housing, into an amplifier circuit which essentially amplifies an output electrical charge of the vibrating element. As a structure that can solve this problem, there is a structure providing an insulating layer between the vibrating element and the sensor housing supporting portion (Japanese Patent Kokai Publication No. JP2007-333397A).

In addition, a structure forming the vibrating element on the circuit board can electrically insulate the sensor housing and the vibrating element (Japanese Patent Kokai Publication No. JP2004-077255A). Further, there is a structure insulating the vibrating element from the metal housing by that the vibrating element has a hollow circular diaphragm structure and the hollow portion thereof is supported by an insulating ring projection (Japanese Patent Kokai Publication No. JP-H05-157762A).

In a conventional acceleration sensor, there is a problem shown below. First, there is a problem that, if a thickness of an adhesive layer formed is thin, concave-convex shapes in the surface of a supporting portion formed in a sensor housing and an adhesion surface of a vibrating element partially make contact thereby having electrical conductivities, and, as a result, insulation properties can not be maintained. Further, there is a problem in that the vibration characteristic of the vibrating element varies depending on the fluctuation in the thickness of the adhesive layer.

Second, there is a problem that, in general, electrically-conductive adhesive agents are used for bonding boards and vibrating elements, however, it is difficult to extend a life due to a detachment of a joint portion by an impact acceleration applied from outside or by stress repetitively generated in a supporting portion by the bending vibration of the vibrating element.

Third, there is a problem that, in a structure that a hollow circular diaphragm vibrating element is supported by an insulating ring projection, since an electrode for a sensor output is provided in a peripheral portion subjected to large vibration amplitudes, vibration characteristics of the vibrating element is changed depending on the fluctuation in solder volume or in solder point and, as a result, individual differences become large.

Therefore, a highly reliable acceleration sensor is desired that can easily control the thickness of the insulating layer provided between the vibrating element and the supporting base, and that has a supporting portion structure which increases the adhesion strength between a contact portion of the vibrating element and a circuit board for getting electrical signals and which increases the adhesion strength with the supporting base and that achieves a long life and the stable sensor characteristics of high resistance to mechanical impact and electrical noise mixed from outside.

### SUMMARY OF THE INVENTION

In a first aspect of the present invention, an acceleration sensor according to the present invention comprises a vibrating element including a piezoelectric body, a circuit board amplifying output charge of the piezoelectric body that is generated due to bending vibration of the vibrating element, and a sensor housing composed of a highly conductive material, the sensor housing receiving the vibrating element and the circuit board. One or two extending region(s) are formed so as to protrude from one side of the circuit board, the extending region(s) connecting mechanically and electrically the circuit board to the vibrating element. The sensor housing includes a supporting base supporting the vibrating element, and a recess portion is formed on the supporting base. The supporting base is configured such that the extending region(s) of the circuit board cover(s) the recess portion, and the vibrating element is fixed and supported by an insulating adhesive agent with which a space that is formed from the recess portion and the extending region(s) is filled.

According to such configuration, an acceleration sensor with high reliability can be achieved that is necessary for measuring or detecting the vibration of an electrical device having a mechanical driving source.

In a first aspect, it is preferred that the sensor housing further includes a stepwise guide portion for positioning the circuit board.

In addition, it is preferred that the extending region(s) further comprise(s) one or more through-hole(s) provided in a contact portion between the insulating adhesive agent and the extending region.

In addition, it is preferred that the extending region(s) further comprise(s) one or more depression(s) provided in a contact portion between the insulating adhesive agent and the extending region.

In addition, it is preferred that a notch portion is formed in a root portion of the extending region.

In addition, it is preferred that the vibrating element has a laminate structure of the piezoelectric body and a metal supporting plate.

In addition, it is preferred that a depth of the recess portion is three times more than a larger value among a center line average roughness of the surface of the metal supporting plate of the vibrating element and a center line average roughness of the bottom face of the recess portion.

In addition, it is preferred that a height of the guide portion from the bottom face of the sensor housing is same as a height of the supporting base from the bottom face of the sensor housing.

According to such configuration, the insulation property from the sensor housing can be maintained by the insulating adhesive layer intervening between the vibrating element and the supporting base, and since the thickness of an insulating layer can be controlled to a constant thickness by a gap (clearance) between the surface of the supporting base where the circuit board is arranged and the bottom face of the recess portion, an acceleration sensor can be achieved that has high resistance to electrical noise mixed from outside, and has highly stable sensor characteristics and small fluctuation of the sensor characteristics.

Further, the insulating adhesive agent can integrally bond an end of the vibrating element and the circuit board through a gap between an aperture of the recess portion formed at the supporting base and the vibrating element, and since a bond surface area formed from two faces that are the bottom face of the recess portion and a wall face, becomes wider than a flat face having no recess portion by filling the insulating adhesive agent into the recess portion, the adhesive strength of the vibrating element and the supporting base also increases. Thus, a detachment of the vibrating element and the circuit board and a detachment from the supporting base that are associated with an impact acceleration applied from outside, can be prevented, a long life acceleration sensor can be achieved by acquiring high mechanical impact resistance.

### BRIEF DESCRIPTION OF THE DRAWINGS

Figs. 1A to 1C are a plan view and cross-sectional views of an acceleration sensor according to a first exemplary embodiment of the present invention.
Fig. 2 is a plan view of a sensor housing, except for a circuit board and a vibrating element from the acceleration sensor according to Figs.1A to 1C.
Figs. 3A and 3B are a plan view and cross-sectional view of an acceleration sensor according to a second exemplary embodiment of the present invention.
Figs. 4A and 4B are a plan view and cross-sectional view of an acceleration sensor according to a third exemplary embodiment of the present invention.
Figs. 5A to 5C are a plan view and cross-sectional views of an acceleration sensor according to a fourth exemplary embodiment of the present invention.
Fig. 6 is a figure showing an impedance change when a normalized thickness is changed, upon normalizing the thickness of an insulating adhesive agent with a larger value of center line average roughnesses of a surface of a metal supporting plate of a vibrating element and a bottom face of a recess portion.
Fig. 7 is a perspective view showing a component of an HDD vibration measurement system according to a fifth exemplary embodiment of the present invention.

### DETAILED DESCRIPTION OF EXAMPLE EMBODIMENTS

Exemplary Embodiments of the present invention will be explained referring to the drawings. In addition, in a configuration of each Exemplary Embodiment explained below, the same elements are denoted by the same reference numerals and the redundant explanations thereof are omitted. It is to be noted that drawing reference symbols are added in order to understand the present invention, and are not intended to limit the present invention to the illustrated modes of the drawings.

### (First exemplary embodiment)

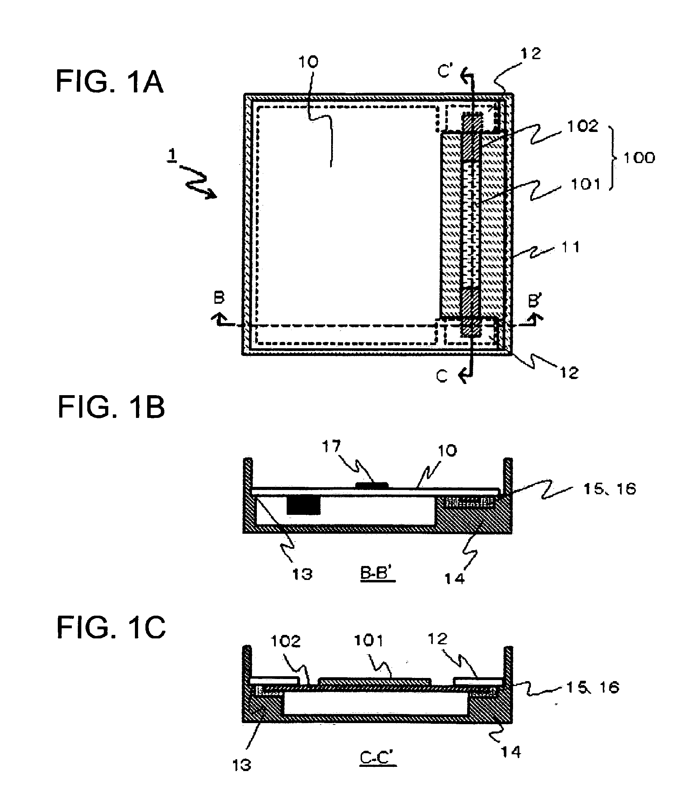

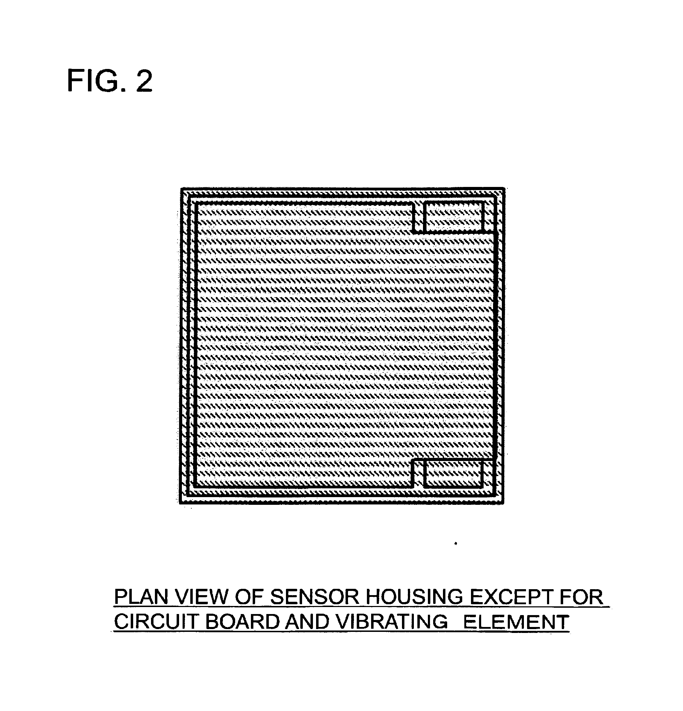

A first exemplary embodiment is an acceleration sensor comprising a sensor housing 11 using a highly conductive material, a vibrating element 100 having a laminate structure of a piezoelectric body 101 and a metal supporting plate 102, and a circuit board 10 amplifying an output electrical charge of the piezoelectric body 101 which is generated due to bending vibration of the vibrating element 100. Fig. 1A is a whole plan view thereof, Fig. 1B is a B-B' cross-sectional view of Fig. 1A, and Fig. 1C is a C-C' cross-sectional view of Fig. 1A (the same as in each Figure). Fig.2 is a plan view of the sensor housing, except for the circuit board 10 and the vibrating element 100.

Shown in the plan view of Fig. 1A, the circuit board 10 has two extending regions 12 formed so as to respectively protrude from both end portions of one side of the circuit board 10 (the right side in Fig. 1A) and mechanically and electrically connecting the circuit board 10 and a supporting portion of the vibrating element 100 to each other. In addition, there are two extending regions in this exemplary embodiment, however it may be one extending region on one side. This extending region 12 is configured so as to cover a recess portion 15 described below. An electrical component 17 is arranged to(or on) the circuit board 10.

The sensor housing 11 has a guide portion 13 positioning and mounting the circuit board 10 and a supporting base 14 supporting and fixing the vibrating element 100. As shown in Figs. 1B and 1C, the guide portion 13 is a stepwise portion provided inside the sensor housing 11. By arranging the circuit board 10 on this stepwise portion, positioning can be performed. The circuit board 10 is arranged on this guide portion 13 and the supporting base 14. Thus, it is preferred that the guide portion 13 and the supporting base 14 have the same height from the bottom face of the sensor housing 11.

As shown in Figs. 1B and 1C, the supporting base 14 has the recess portion 15 forming a defined space for filling an insulating adhesive agent around the vibrating element 100 and the supporting base 14 and has a structure that a space formed and surrounded with an extending region 12 formed at the circuit board 10 and the recess portion 15 of the supporting base 14 (and the vibrating element 100) is filled with an insulating adhesive agent 16. In this Exemplary Embodiment, the space was filled with the insulating adhesive agent 16, however other fixing materials may be used if the material has adhesive and insulation properties.

An outer form of the sensor housing 11 was 8.5mm in length, 8.5mm in width and 3mm in height. The guide portion 13 provided in the shown position for mounting the circuit board was 0.5mm in width and 1mm in height. The supporting base 14 provided at a shown position for mounting the vibrating element was 2mm in width, 1mm in length, and 1mm in height, and the recess portion 15 (which was 1.8mm in width, 0.8mm in length and 105 micro meters in depth) was formed on the supporting base. An outer form of the circuit base 10 was 7.5mm in length and 7.5mm in width, and the extending regions 12 (which was 2mm in length and 1 mm in width) for mounting the vibrating element were provided at two positions shown on one side (region) of the circuit board. An outer form of the metal supporting plate 102 of the vibrating element was 1.5mm in width, 6.5mm in length, and 100 micro meters in thickness.

In Table 1, a comparison between electrical noise resistance of the acceleration sensor according to the first exemplary embodiment in the present invention and that of a conventional acceleration sensor in which a vibrating element is electrically connected to a sensor housing is shown, the electrical noise resistance being measured in an amount of a normalized electrical charge obtained by normalizing an amount of the electrical charge applied to the sensor housing from outside with an amount of the electrical charge in which electrical noise due to a externally applied electrical charge is not overlapped to the signal output of the acceleration sensor.

**Table 1**

| Normalized electrical charge amount | Noise resistance | |
|---|---|---|
| | Example 1 of the present invention | Conventional type |
| 2 | ○ | ○ |
| 5 | ○ | Δ |
| 10 | ○ | × |

| | | |
|---|---|---|
| ○: S/N deterioration rate 0% or more - less than 5% Δ: 5% or more - less than 30% ×: 30% or more | | |

In a normalized impact acceleration obtained by normalizing an impact acceleration applied from outside with an acceleration at which a detachment between the vibrating element and the sensor housing is generated in the conventional sensor, the mechanical impact resistances of the first exemplary embodiment of the present invention and the conventional sensor are shown in Table 2.

**Table 2**

| Normalized impact acceleration | Mechanical impact resistance | |
|---|---|---|
| | Example 1 of the present invention | Conventional type |
| 2 | ○ | ○ |
| 5 | ○ | × |
| 10 | ○ | × |

| | | |
|---|---|---|
| ○: Destruction incidence rate 0% or more - less than 5% Δ: 5% or more - less than 30% ×: 30% or more | | |

As can be seen from Tables 1 and 2, the acceleration sensor of the first exemplary embodiment shows high electrical noise resistance and high mechanical impact resistance. (Second exemplary embodiment)

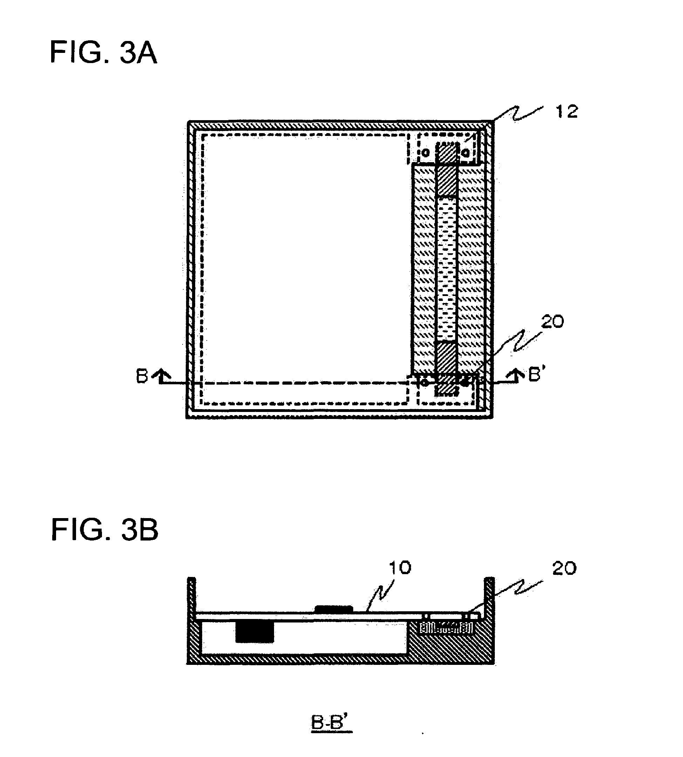

In a second exemplary embodiment, as shown in Figs. 3A and 3B, in addition to the structure of the first exemplary embodiment, a through-holes 20 having a diameter of 0.1mm were formed at the shown positions of the extending regions 12 formed on the circuit board 10. In this exemplary embodiment, two through-holes were formed in each extending region, however it is not limited to this number. Therefore, since the through-hole 20 can be filled with the insulating adhesive agent 16, and as a result, adhesion strength increases by increasing a bond surface area of the circuit board 10.

A mechanical impact resistance of the second exemplary embodiment of the present invention is shown in Table 3 in a normalized impact acceleration obtained by normalizing an impact acceleration applied from outside with the acceleration at which the detachment of the vibrating element and the sensor housing is generated in the sensor of the first exemplary embodiment.

**Table 3**

| Normalized impact acceleration | Mechanical impact resistance |
|---|---|
| | Through-hole exists |
| 1 | ○ |
| 2 | ○ |
| 5 | ○ |

| | |
|---|---|
| ○: Destruction incidence rate 0% or more - less than 5% Δ: 5% or more - less than 30% ×: 30% or more | |

As can be seen from Table 3, the acceleration sensor of the second exemplary embodiment shows high mechanical impact resistance.

In addition, a depression may be formed instead of the through-hole formed in the extending region (not shown). A similar effect by the increase of the adhesion surface area of the extending region can be achieved.

### (Third exemplary embodiment)

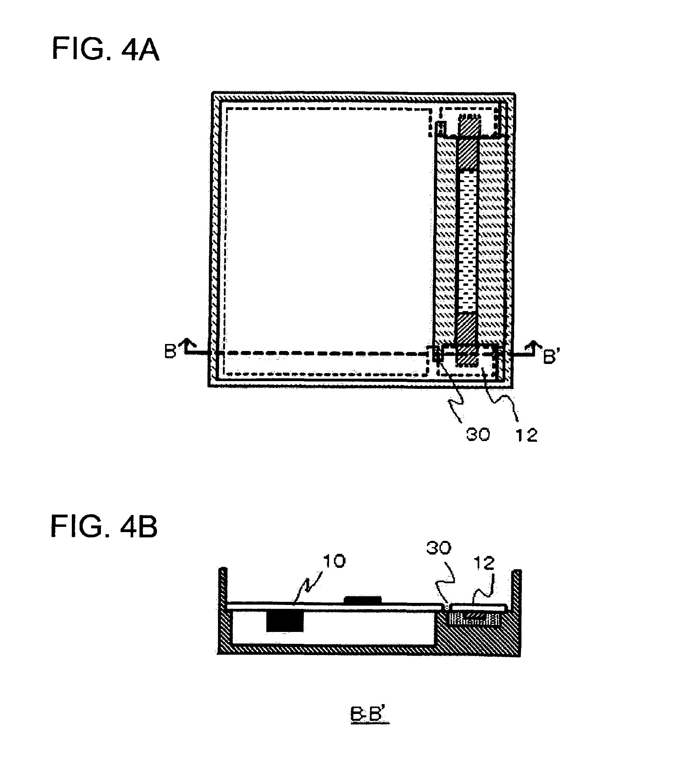

In a third exemplary embodiment, as shown in Figs. 4A and 4B, in addition to the structure of the first exemplary embodiment, a notch portion 30 was formed in the shown portion of the extending region 12 formed on the circuit board 10. Due to local decrease in stiffness of the root of the extending region 12 where the notch portion 30 was formed, it is possible that the deformation of the circuit board 10 by stress generated according to vibration transmitted from a signal cable and the deflection of the signal cable is absorbed. Therefore, resistance to mechanical noise such as vibration mixed from outside improves.

In a normalized acceleration obtained by normalizing a vibration acceleration transmitted from the signal cable with a vibration acceleration transmitted from the sensor cable when mechanical noise was overlapped to a sensor output in the acceleration sensor in the first exemplary embodiment, the mechanical noise resistance of the third exemplary embodiment of the present invention is shown in Table 4. As can be seen from Table 4, the acceleration sensor of the fourth exemplary embodiment shows high mechanical noise resistance.

**Table 4**

| Normalized vibration acceleration | Mechanical noise resistance |
|---|---|
| 1 | ○ |
| 4 | ○ |
| 5 | Δ |

| | |
|---|---|
| ○: S/N deterioration rate 0% or more - less than 5% Δ: 5% or more - less than 30% ×: 30% or more | |

### (Fourth exemplary embodiment)

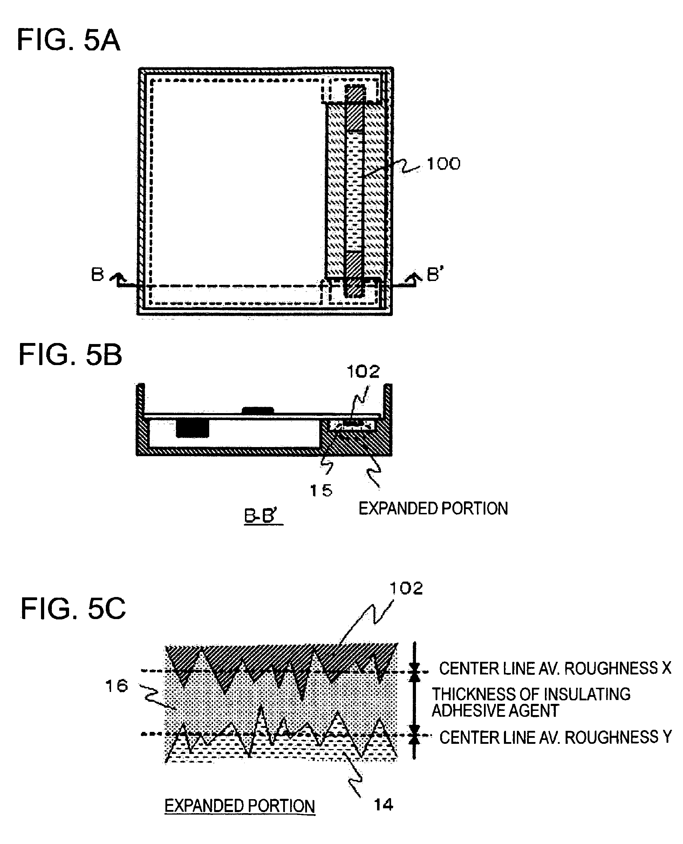

As shown in Figs. 5A, 5B and 5C, a larger value among the center line average roughness X of the surface of the metal supporting plate 102 of the vibrating element 100 and the center line average roughness Y of the bottom face of the recess portion 15 in the structure of the first exemplary embodiment is adopted, and a fourth exemplary embodiment has a depth of the recess portion 15 such that the insulating adhesive agent 16 is three times or more as thick as the adopted value. Fig. 5C is a detailed schematic figure of an expanded portion shown by a dotted line in Fig. 5B.

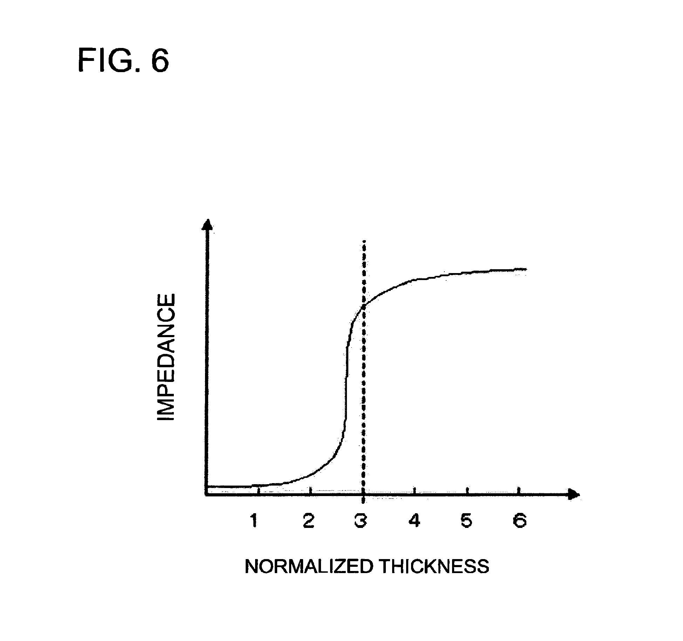

An impedance change is shown in Fig. 6 when a normalized thickness upon normalizing the thickness of the insulating adhesive agent with a larger value of the center line average roughness of the surface of the metal supporting plate of the vibrating element and that of the bottom face of the recess portion was changed. As can be seen from Fig.6, when the normalized thickness becomes more than 3, the impedance rapidly increases, thereby maintaining good insulation properties. Electrical noise resistance improves by such configuration. In addition, the center line average roughness is defined by JIS B 0601-1982.

### (Fifth exemplary embodiment)

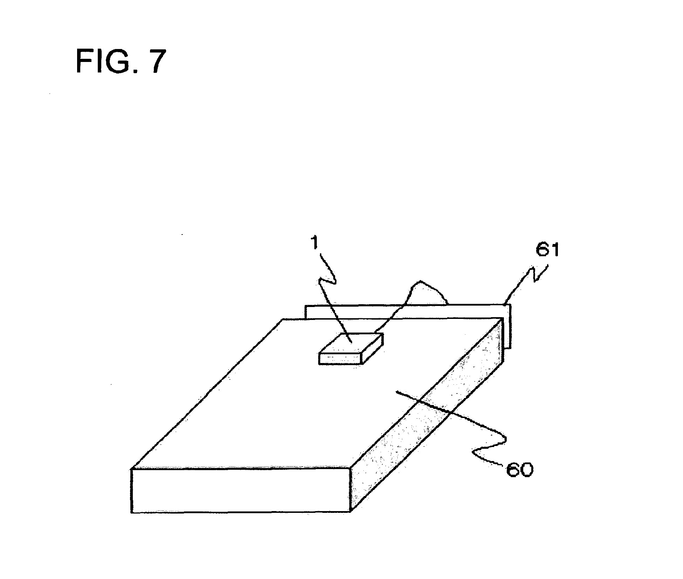

In the fifth exemplary embodiment, as shown in Fig. 7, the acceleration sensor 1 of the first exemplary embodiment to detect a sign of failure of an HDD was mounted on the subject HDD 60, a vibration response was measured by a signal processing board 61 until mechanical failure was generated in the HDD 60 under actual use surroundings.

Table 5 shows that a rate of an acceleration sensor in which electrical and mechanical failure was generated before the failure of the HDD, the subject of measurement, was failed. As tested samples, 100 samples were prepared. As a comparison, the same number of acceleration sensors having a conventional structure were evaluated.

**Table 5**

| Mechanical failure rate | |
|---|---|
| Example 5 of the present invention | Conventional structure |
| 1% | 10% |

As can be seen from Table 5, since the failure rate of the acceleration sensor of this exemplary embodiment was 1%, it was lower than that of the conventional acceleration sensor (10%). Thus, it is found that high reliability can be maintained.

While the present invention has been described with reference to above embodiments, modifications and adjustments of exemplary embodiments are possible within the bounds of the entire disclosure (including the claims and figures) of the present invention, and also based on fundamental technological concepts thereof. Furthermore, a wide variety of combinations and selections of various disclosed elements (including each element of each claim, embodiment and figure etc.) is possible within the claims of the present invention. That is, the present invention clearly includes every type of transformation and modification that a person skilled in the art can do according to the entire disclosure including the claims and figures and to technological concepts thereof.

### REFERENCE SIGNS LIST

- 1: acceleration sensor
- 10: circuit board
- 11: sensor housing
- 12: extending region
- 13: guide portion
- 14: supporting base
- 15: recess portion
- 16: insulating adhesive agent
- 17: electronic component
- 20: through-hole
- 30: notch portion
- 60: HDD
- 61: signal processing board
- 100: vibrating element
- 101: piezoelectric body
- 102: metal supporting plate

## Claims

1. An acceleration sensor (1), comprising:
a vibrating element (100) including a piezoelectric body (101);
a circuit board (10) amplifying output charge of the piezoelectric body (101) that is generated due to bending vibration of the vibrating element (100); and
a sensor housing (11) composed of a highly conductive material, the sensor housing receiving the vibrating element (100) and the circuit board (10);
wherein:
one or two extending region(s) (12) are formed so as to protrude from one side of the circuit board, the extending region(s) connecting mechanically and electrically the circuit board to the vibrating element;
the sensor housing (11) includes a supporting base (14) supporting the vibrating element (100);
the supporting base (14) includes a recess portion (15), the supporting base being configured such that the extending region(s) (12) of the circuit board (10) cover(s) the recess portion; and
the vibrating element (100) is fixed and supported by an insulating adhesive agent (16) with which a space that is formed from the recess portion (15) and the extending region(s) (12) is filled.

2. The acceleration sensor (1) according to claim 1, wherein the acceleration sensor further includes a stepwise guide portion (13) for positioning the circuit board (10).

3. The acceleration sensor according to claim 1 or 2, wherein the extending region(s) further comprise(s) one or more through-hole(s) (20), the through-hole(s) provided in a contact portion between the insulating adhesive agent (16) and the extending region (12)..

4. The acceleration sensor (1) according to claim 1 or 2, wherein the extending region(s) further comprise(s) one or more depression(s), the depression(s) provided in a contact portion between the insulating adhesive agent (16) and the extending region (12).

5. The acceleration sensor (1) according to any one of claims 1 to 4, wherein a notch portion (30) is formed in a root portion of the extending region (12).

6. The acceleration sensor (1) according to any one of claims 1 to 5, wherein the vibrating element (100) has a laminate structure of the piezoelectric body (101) and a metal supporting plate (102).

7. The acceleration sensor (1) according to claim 6, wherein a depth of the recess portion (15) is three times more than a larger value among a center line average roughness of the surface of the metal supporting plate (102) of the vibrating element (100) and a center line average roughness of the bottom face of the recess portion (15).

8. The acceleration sensor (1) according to any one of claims 2 to 7, wherein a height of the guide portion (13) from the bottom face of the sensor housing (11) is same as a height of the supporting base (14) from the bottom face of the sensor housing (11).

## Patentansprüche

1. Beschleunigungssensor (1), der Folgendes umfasst:
ein vibrierendes Element (100) mit einem piezoelektrischen Körper (101);
eine Leiterplatte (10), die Ausgangsladung des piezoelektrischen Körpers (101) verstärkt, die aufgrund von Biegevibrationen des vibrierenden Elements (100) erzeugt wird; und
ein Sensorgehäuse (11) bestehend aus einem hochleitfähigen Material, wobei das Sensorgehäuse das vibrierende Element (100) und die Leiterplatte (10) aufnimmt;
wobei:
eine oder zwei Verlängerungsregionen (12) so ausgebildet ist/sind, dass sie von einer Seite der Leiterplatte vorsteht/-en, wobei die Verlängerungsregion(en) die Leiterplatte mechanisch und elektrisch mit dem vibrierenden Element verbindet/n;
das Sensorgehäuse (11) eine Tragbasis (14) aufweist, die das vibrierende Element (100) trägt;
die Tragbasis (14) einen Aussparungsabschnitt (15) aufweist, wobei die Tragbasis so konfiguriert ist, dass die Verlängerungsregion(en) (12) der Leiterplatte (10) den Aussparungsabschnitt bedeckt/-en; und
das vibrierende Element (100) durch einen isolierenden Klebstoff (16) befestigt und getragen wird, mit dem ein von dem Aussparungsabschnitt (15) und der/den Verlängerungsregion(en) (12) gebildeter Raum gefüllt wird.

2. Beschleunigungssensor (1) nach Anspruch 1, wobei der Beschleunigungssensor ferner einen abgestuften Führungsabschnitt (13) zum Positionieren der Leiterplatte (10) beinhaltet.

3. Beschleunigungssensor nach Anspruch 1 oder 2, wobei die Verlängerungsregion(en) ferner ein oder mehrere Durchgangslöcher (20) aufweist/-en, wobei das/die Durchgangsloch/-löcher in einem Kontaktabschnitt zwischen dem isolierenden Klebstoff (16) und der Verlängerungsregion (12) vorgesehen ist/sind.

4. Beschleunigungssensor (1) nach Anspruch 1 oder 2, wobei die Verlängerungsregion (en) ferner eine oder mehrere Vertiefungen aufweist/-en, wobei die Vertiefung(en) in einem Kontaktabschnitt zwischen dem isolierenden Klebstoff (16) und der Verlängerungsregion (12) vorgesehen ist/sind.

5. Beschleunigungssensor (1) nach einem der Ansprüche 1 bis 4, wobei ein Kerbabschnitt (30) in einem Fußabschnitt der Verlängerungsregion (12) ausgebildet ist.

6. Beschleunigungssensor (1) nach einem der Ansprüche 1 bis 5, wobei das vibrierende Element (100) eine Laminatstruktur des piezoelektrischen Körpers (101) und eine Metallträgerplatte (102) hat.

7. Beschleunigungssensor (1) nach Anspruch 6, wobei eine Tiefe des Aussparungsabschnitts (15) dreimal größer ist als ein größerer Wert aus einer durchschnittlichen Mittellinienrauigkeit der Oberfläche der Metallträgerplatte (102) des vibrierenden Elements (100) und einer durchschnittlichen Mittellinienrauigkeit der Bodenfläche des Aussparungsabschnitts (15).

8. Beschleunigungssensor (1) nach einem der Ansprüche 2 bis 7, wobei eine Höhe des Führungsabschnitts (13) von der Bodenfläche des Sensorgehäuses (11) gleich einer Höhe der Tragbasis (14) von der Bodenfläche des Sensorgehäuses (11) ist.

## Revendications

1. Capteur d'accélération (1), comprenant :
un élément vibrant (100) comportant un corps piézoélectrique (101) ;
une carte de circuit imprimé (10) qui amplifie la charge de sortie du corps piézoélectrique (101) qui est générée en raison de la vibration de flexion de l'élément vibrant (100) ; et
un logement de capteur (11) composé d'un matériau hautement conducteur, le logement de capteur recevant l'élément vibrant (100) et la carte de circuit imprimé (10) ;
dans lequel :
une ou deux régions d'extension (12) sont formées de façon à dépasser d'un côté de la carte de circuit imprimé, la ou les régions d'extension reliant mécaniquement et électriquement la carte de circuit imprimé à l'élément vibrant ;
le logement de capteur (11) comporte une base de support (14) qui supporte l'élément vibrant (100) ;
la base de support (14) comporte une partie creuse (15), la base de support étant configurée de telle sorte que la ou les régions d'extension (12) de la carte de circuit imprimé (10) couvrent la partie creuse ; et
l'élément vibrant (100) est fixé et supporté par un agent adhésif isolant (16) avec lequel un espace formé depuis la partie creuse (15) et la ou les régions d'extension (12) est rempli.

2. Capteur d'accélération (1) selon la revendication 1, le capteur d'accélération comportant en outre une partie de guide par paliers (13) pour positionner la carte de circuit imprimé (10).

3. Capteur d'accélération (1) selon la revendication 1 ou 2, dans lequel la ou les régions d'extension comprennent en outre un ou plusieurs trous débouchants (20), le ou les trous débouchants étant fournis dans une partie de contact entre l'agent adhésif isolant (16) et la région d'extension (12).

4. Capteur d'accélération (1) selon la revendication 1 ou 2, dans lequel la ou les régions d'extension comprennent en outre un ou plusieurs creux, le ou les creux étant fournis dans une partie de contact entre l'agent adhésif isolant (16) et la région d'extension (12).

5. Capteur d'accélération (1) selon l'une quelconque des revendications 1 à 4, dans lequel une partie d'encoche (30) est formée dans une partie racine de la région d'extension (12).

6. Capteur d'accélération (1) selon l'une quelconque des revendications 1 à 5, dans lequel l'élément vibrant (100) a une structure feuilletée du corps piézoélectrique (101) et une plaque de support métallique (102).

7. Capteur d'accélération (1) selon la revendication 6, dans lequel une profondeur de la partie creuse (15) est trois fois plus grande que la valeur la plus grande entre une rugosité moyenne centrale de la surface de la plaque de support métallique (102) de l'élément vibrant (100) et une rugosité moyenne centrale de la face inférieure de la partie creuse (15).

8. Capteur d'accélération (1) selon l'une quelconque des revendications 2 à 7, dans lequel une hauteur de la partie de guide (13) depuis la face inférieure du logement de capteur (11) est égale à une hauteur de la base de support (14) depuis la face inférieure du logement de capteur (11).
